# EUROPEAN PATENT SPECIFICATION

(11) **EP 2 269 394 B1**
(45) Date of publication and mention of the grant of the patent: **04.12.2019**
(21) Application number: 08874136.8
(22) Date of filing: 23.12.2008
(51) Int. Cl.: H04W 76/50, H04W 68/00, H04W 4/90

(54) **METHODS AND APPARATUSES FOR TRANSMITTING/RECEIVING AN EARTHQUAKE AND/OR TSUNAMI WARNING**
VERFAHREN UND VORRICHTUNGEN ZUM SENDEN/EMPFANGEN EINER ERDBEBEN- UND/ODER TSUNAMIWARNUNG
PROCÉDÉS ET APPAREILS D'ÉMISSION/RÉCEPTION D'UNE ALERTE AU SÉISME ET/OU AU TSUNAMI

(30) Priority: 29.04.2008 US 48610 P
(43) Date of publication of application: 05.01.2011
(73) Proprietor: Telefonaktiebolaget LM Ericsson (publ), 164 83 Stockholm (SE)
(72) Inventor: SCHLIWA-BERTLING, Paul, 590 71 Ljungsbro (SE); BERGSTRÖM, Andreas, 590 47 Vikingstad (SE); MOLANDER, Anders, 582 28 Linköping (SE); EKEMARK, Sven, 743 40 Storvreta (SE); BERGQVIST, Jens, 587 37 Linköping (SE)
(74) Representative: Ericsson
(86) International application number: PCT/SE2008/051559
(87) International publication number: WO 2009/134182

(56) References cited:
- EP-A- 1 209 886
- WO-A-2007/045564
- US-A1- 2005 037 728
- ETSI: "Digital cellular telecommunications system (Phase 2+); Mobile radio interface layer 3 specification; Radio Resource Control (RRC) protocol (3GPP TS 44.018 version 6.23.0 Release 6)" ETSI STANDARDS, [Online] January 2008 (2008-01), pages 1-51, XP002525870 SOPHIA ANTIPOLIS CEDEX, FRANCE Retrieved from the Internet: URL:http://pda.etsi.org/exchangefolder/ts_ 144018v062300p.pdf> [retrieved on 2009-04-28]

## Description

### TECHNICAL FIELD

The present invention relates to methods and arrangements in a telecommunication system, in particular to arrangements allowing for transmitting/receiving an earthquake and tsunami warning as well as methods for such transmission/reception.

### BACKGROUND

There is work ongoing within the third generation partnership project (3GPP) GSM Edge radio access network (GERAN) standardization in order to introduce support for an Earthquake Tsunami Warning System (ETWS), where it shall be possible to quickly send notifications about coming earthquakes and/or tsunamis to user equipments. The user equipment shall then warn the user so that he/she may execute safety measures.

There are requirements to reach the users/user equipments with a primary notification message within 4 seconds. Primary notification is information used specifically in ETWS in order to notify users about the most urgent event in seconds rather than minutes. Secondary notification is information used in ETWS in order to notify users supplementary information that is of lesser urgency, such as instructions on what to do, where to get help etc.

In order to avoid that fake messages are received causing chaos, inclusion of authentication information in the primary notification will most likely be needed. An alternative that is discussed is to have authentication information in the form of a digital signature (e.g. 41 bytes if using DSA signatures). The size of the primary notification message would then be larger than the size of a single common control channel (CCCH) control message within GERAN.

The existing proposal that has been discussed within GERAN consists of using the existing "same as before" value for the Page Mode information element (IE) on the paging channel (PCH) and in existing messages on the access grant channel (AGCH) in order to inform about an ongoing ETWS warning. That setting would then trigger the user equipments to listen to the cell broadcast channel (CBCH). That setting of the Page Mode IE would then be sent within all the paging groups for a certain amount of time (in order to reach all paging groups) and the user equipments would then receive the indication when they listen to their own paging group. The Earthquake Tsunami Warning System (ETWS) primary notification would then be sent by the network on the CBCH.

There are, however, some problems with the proposed solution. The time needed for the user equipments to start listening to the cell broadcast channel (after receiving an indication on the PCH/AGCH) and then to receive the full message on the CBCH would prevent the user equipments to receive the ETWS primary notification within 4 seconds in most system configurations. The CBCH messages are not sent very frequently, according to 3GPP TS 45.002 the short message service cell broadcast (SMSCB) header is sent once every ∼1.88 seconds (when TB=0; TB = (FN DIV 51)mod(8)) in case only CBCH normal is used and every ∼0.94s (when TB=0 or TB=4; TB = (FN DIV 51)mod(8)) in case both CBCH normal and CBCH extended are used. In addition, the reception time would then also increase significantly in case one CBCH message is lost.

The document EP 1 209 886 A2 discloses that a controller receives the information identifying a geographic area in which there is an emergency situation from a wireless communication network. The controller initiates an emergency notification message which is in the form of a short message service, an interactive voice response or a paging service, to the mobile subscribers in that area.

The document ETSI: "Digital cellular telecommunications system (Phase 2+); Mobile radio interface layer 3 specification; Radio Resource Control (RRC) protocol (3GPP TS 44.018 version 6.23.0 Release 6)", ETSI STANDARDS, January 2008 (2008-01), pages 1-51, SOPHIA ANTIPOLIS CEDEX, FRANCE discloses that a notification message may be transmitted in rest octets of several paging request messages.

The document US 2005/0037728 A1 deals with transmission of an emergency status indicator by a base station. The emergency status indicator may be an emergency bit predetermined in a paging header.

The document WO 2007/045564 concerns transmitting alarm messages in system information or in a control channel. System information may be transmitted in a dedicated or associated control channel using a byte of an 'SI 6 rest octet'.

### SUMMARY

The embodiments and/or examples disclosed in the following description which are not covered by the appended claims are considered as not being part of the invention. The invention is set out in the appended claims.

Further embodiments are listed in the dependent claims.

Thanks to the provision of methods, a communication network node and a user equipment, in which the transmitting/receiving procedure is improved the users/user equipments will be reached with an ETWS primary notification message within 4 seconds.

Other objects, advantages and novel features of the invention will become apparent from the following detailed description of the invention when considered in conjunction with the accompanying drawings and claims.

### BRIEF DESCRIPTION OF THE DRAWINGS

For a better understanding, reference is made to the following drawings and preferred embodiments of the invention.
Figure 1 is an exemplary block diagram of a mobile communication network;
Figure 2 is a flowchart showing the inventive procedure in a radio base station according to a first embodiment of the present invention;
Figure 3 is a flowchart showing the inventive procedure in a user equipment according to the first embodiment of the present invention;
Figure 4 is a flowchart showing the inventive procedure in a radio base station according to a second embodiment of the present invention;
Figure 5 is a flowchart showing the inventive procedure in a user equipment according to the second embodiment of the present invention;
Figure 6 is a simplified block diagram of a user equipment and an inventive communication network node.

### DETAILED DESCRIPTION

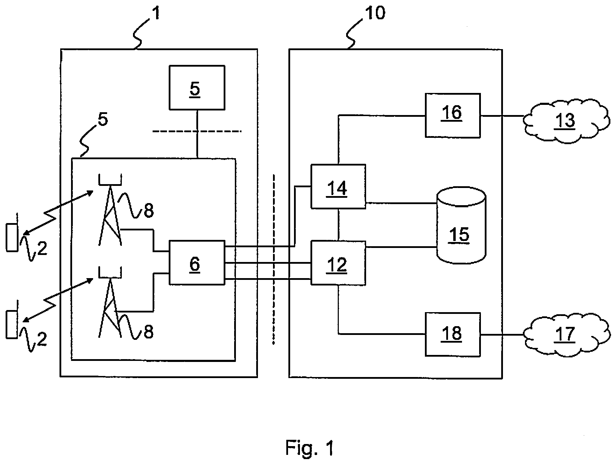

A block diagram of an exemplary 3GPP GSM system network is shown in figure 1. The network comprises a radio access network (RAN), which in the preferred embodiment of the present invention is a GSM/EDGE Radio Access Network (GERAN) 1 and a core network (CN) 10. The GERAN 1 and the CN 10 provide communication and control for a plurality of user equipments (UE) 2.

The GERAN architecture 1 comprises a plurality of Base Station Systems (BSS) 5 each controlled by a Base Station Controller (BSC) 6 which is connected to a set of Base Transciever Stations (BTS) 8 (or, radio base stations). The BTSs 8 comprise the antennas, RF equipment and baseband processing circuits needed to communicate with the UEs 2.

The core network 10 typically comprises at least one Serving GPRS Support Node (SGSN) 12, one or more Gateway GPRS Support Node (GGSN) 18, at least one mobile switching center (MSC) 14, which may include a visitor location register (VLR) (not shown in figure 1), a Gateway MSC (GMSC) 16, and a GPRS home location register (HLR) 15. The CN 10 provides both circuit-switched and packet data communication with various external networks, typically including the Public Switched Telephone Network (PSTN) 13 and one or more packet mode communication network, such as the Internet 17.

According to a preferred embodiment of the present invention, the communication system is herein described as a GSM system. The user equipments 2 may be mobile stations such as mobile telephones ("cellular" telephones) and laptops with mobile termination and thus can be, for example, portable, pocket, hand-held, computer-included or car-mounted mobile devices which communicate voice and/or data with the RAN.

Common control channels support common procedures required to establish a dedicated link with the network. The packet common control channel (PCCCH) comprises logical channels for common control signalling. These subchannels include: the packet random access channel (PRACH), the packet paging channel (PPCH), the packet access grant channel (PAGCH) and the packet notification channel (PNCH).

According to embodiments of the present invention, when there is a risk of an earthquake and/or a tsunami, ETWS primary notification messages is sent either on the GERAN (P)CCCH ((P)PCH) or on a specific packet channel (assigned directly from the paging groups on the (P)CCCH) and thus reaches the user equipments within a short period of time. This is e.g. achieved by introducing a new Mobile Identity within (packet) paging request messages, indicating ETWS notification and then either including primary notification information within several (packet) paging request messages or introducing a new control message "ETWS Primary Notification", which is sent on a GERAN packet channel. It is also proposed to introduce indication of the size of the ETWS primary notification message within the assignment messages. With this proposal it would be possible to fit a flexible amount of data into the message, for instance including digital signatures in order to avoid reception of fake ETWS warning messages, and to reach the user equipments within a short period of time.

According to a first preferred embodiment of the present invention, the actual ETWS primary notification information may be included within (3GPP TS 44.018) paging request messages and within (3GPP TS 44.060) Packet Paging Request messages. The Mobile Identity would then be set to a new type of identity indicating that an ETWS primary notification is ongoing. The ETWS primary notification (at least part of it), is then included within the paging request message (within the rest octets) or, in case PCCCH is used, as an extension within the Packet Paging Request message.

Due to the needed size of the ETWS primary notification information it would need to be segmented in several (packet) paging request messages. Preferably, the amount of ETWS primary notification information that is included in each paging request would be constant in order to allow reception of segments in any order. This is achieved by only including actual ETWS primary notification information in (packet) paging request messages that do not contain other (normal) pages. That could be the normal case during an ongoing ETWS primary notification since that would be prioritised compared to normal pages. The user equipment would then enter non-DRX mode when receiving (part of) ETWS primary notification information within its paging group.

In case a normal page needs to be included in the (packet) paging request message, the new mobile identity (i.e. with the new type of identity indicating ETWS primary notification) would then be included as well in the (packet) paging request message. The user equipment would then enter non-DRX mode in order to receive the actual ETWS primary notification information in following (packet) paging request messages on the (P)CCCH, more specifically the (P)PCH.

In case another (AGCH) control message, e.g. immediate assignment, needs to be sent in a paging group the Page Mode IE shall be set to "Extended paging" (existing value in 3GPP TS 44.018). That triggers the user equipments to listen to an additional paging group where a paging request message including information about an ETWS primary notification is included. The corresponding would be applied for the PCCCH.

According to a second embodiment of the present invention, when the BSS/BSC receives a request to transmit an ETWS primary notification, it shall within each paging group (in the affected cells) send paging request messages containing a new Mobile Identity indicating that there is an ongoing ETWS primary notification. The Mobile Identity would then be set to a new type of identity, which indicates that an ETWS primary notification is ongoing. The 3GPP TS 44.018 immediate assignment message (and the 3GPP TS 44.060 packet downlink assignment message, for the case where PCCCH is used) shall then be updated so that an assignment for a channel where ETWS primary notification information is sent. A user equipment that receives such an immediate assignment message (or Packet Downlink Assignment message in case PCCCH is used) would then directly switch to the indicated resources, where it will receive the ETWS primary notification information. Assignment information for a channel where the actual ETWS primary notification information is sent could also be included within the rest octets in the paging request message or as an extension within the packet paging request message for the case PCCCH is used.

The user equipment would then enter non-discontinuous reception (DRX) mode when it receives the new Mobile Identity, indicating that there is an ongoing ETWS primary notification, until it has received the assignment information for the ETWS notification channel, i.e. where the channel where the ETWS primary notification information is sent. For instance, in case it is not possible to include the assignment information within the rest octets for a paging request message (or in the packet paging request message), the user equipment would then be able to receive it within another paging group.

In case another (legacy) control message needs to be sent on the PCH/AGCH (or PPCH/PAGCH) during the ETWS primary notification period, the Page Mode IE shall be set to the existing value "Extended paging", which makes the user equipment listen to an additional paging group where the "ETWS primary notification" indication is included.

In order to convey the ETWS primary notification information, a new control message "ETWS primary notification" shall be introduced. Preferably the message would be sent as a distribution message on a packet channel (e.g. PACCH) and thus be received by several user equipments simultaneously. Due to the needed size of the ETWS primary notification information (including e.g. digital signature) the new control message would need to be segmented. That may be done for instance by including a size of the actual conveyed warning information and the sequence number of the message. That way, the receiver (the user equipment) knows whether it needs to receive more ETWS primary notification control messages and may store the already received ones independent of the order of reception.

One alternative to segment the message is to indicate either the number of segmented blocks or the size of the actual information in the immediate assignment message and then indicate the sequence numbers using the radio link control (RLC) block sequence number (BSN) values.

In case PCCCH is used, the channel for transfer of the "ETWS primary notification" messages could typically be setup on the same PDCH as the PCCCH.

According to a third preferred embodiment of the present invention, a new "ETWS Primary Notification" control message, which is sent on the CCCH (more specifically the AGCH) and the PCCCH (PAGCH) in case that is used, is introduced. When the BSC/BSS is requested to send out an ETWS primary notification, it shall send the new "ETWS Primary Notification" control message on the (P)CCCH in all the paging groups. Due to the size of the ETWS primary notification information, the "ETWS Primary Notification" control message would be segmented.

In case a normal legacy paging message or control message needs to be sent on the (P)PCH/(P)AGCH the Page Mode IE is set to the existing value "Extended paging", which makes the user equipment listen to an additional paging group where an "ETWS Primary Notification" message then may be sent. Alternatively, or in addition, a new Type of Identity (within the Mobile Identity) may be introduced in 3GPP TS 24.008. When such a new type of identity is used within a (packet) paging request message on the (P)CCCH, the user equipments would then enter non-DRX mode in order to receive an ETWS Primary Notification. That way, the user equipments would not need to wait until the other paging group before starting to receive the ETWS primary notification.

When the user equipment receives part of the ETWS primary notification or a new flag/indication in a paging message it enters non-DRX mode in order to receive the complete ETWS primary notification message.

However, a drawback with this third alternative is that legacy user equipments would not understand the new control message, which is sent on the CCCH/AGCH. There is a requirement in 3GPP TS 44.018 stating that "The network is required to send valid layer 3 messages continuously on all paging subchannels on CCCH", which then would need to be violated (at least towards legacy user equipments) in case of the ETWS warning.

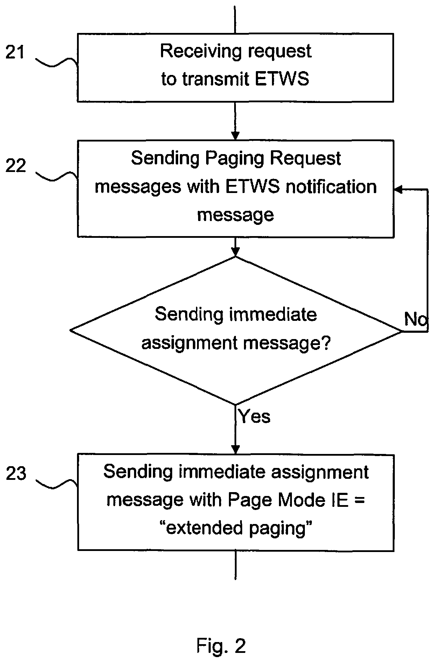

According to the first embodiment of the present invention, the procedure in a communication network node, as shown in fig. 2, of transmitting to user equipments an earthquake and/or tsunami warning message in a communication network system comprising communication network nodes each serving at least one cell in which said user equipments are situated, is as follows:
- Receiving request to transmit an ETWS primary notification (step 21);
- Sending Paging Request messages comprising ETWS primary notification information (step 22);
- If Immediate Assignment messages are sent, setting the Page Mode IE to the value "Extended Paging" (step 23).

According to some embodiments, the method further comprises the step of segmenting said earthquake and/or tsunami primary notification warning message in several paging request messages, whereby an amount of earthquake and/or tsunami primary notification information that is included in each paging request message is constant in order to allow reception of segments in any order.

According to some embodiments, the method further comprises the step of sending a control message triggering said user equipment to listen to an additional paging group in order to receive said paging request message comprising information about said earthquake and/or tsunami primary notification warning message.

According to some embodiments, information on said warning message is included within rest octets of said paging request message.

According to some embodiments, the method further comprises the step of setting a mobile identity in said paging request messages indicating that said earthquake and/or tsunami warning message is ongoing.

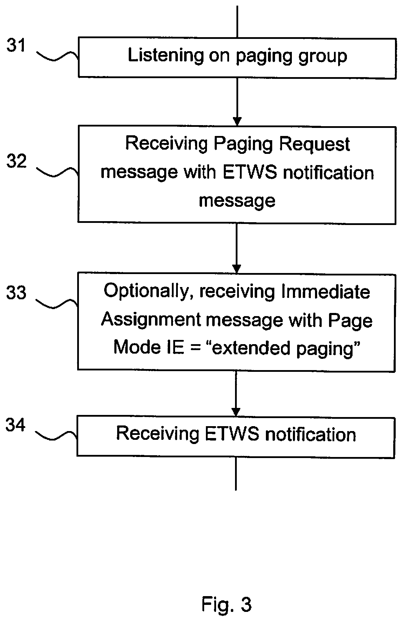

According to the first embodiment of the present invention, the procedure in a user equipment, as shown in fig. 3, of receiving an earthquake and/or tsunami warning message in a communication network system comprising communication network nodes each serving at least one cell in which said user equipments are situated, is as follows:
- Listening on paging group (step 31);
- Receiving Paging Request message with ETWS notification message (step 32);
- Optionally, receiving Immediate Assignment messages, with the Page Mode IE set to the value "Extended Paging" (step 33);
- Receiving ETWS notification (step 34).

According to some embodiments, the method further comprises the step of entering a non-discontinuous reception mode when receiving at least parts of said earthquake and/or tsunami primary notification warning message.

According to some embodiments, the method further comprises the steps of:
- receiving a control message;
- listening to an additional paging group in order to receive said paging request message comprising information about said earthquake and/or tsunami primary notification warning message.

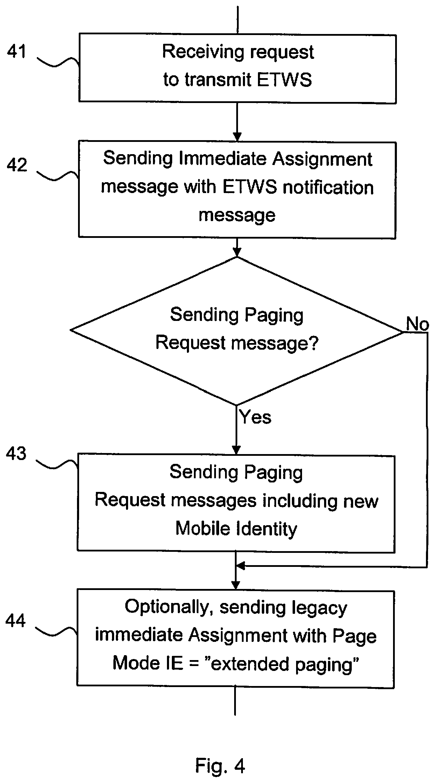

According to the second embodiment of the present invention, the procedure in a communication network node, as shown in fig. 4, of transmitting to user equipments an earthquake and/or tsunami warning message in a communication network system comprising communication network nodes each serving at least one cell in which said user equipments are situated, is as follows:
- Receiving request to transmit an ETWS primary notification (step 41);
- Sending Immediate Assignment message comprising assignment for (packet) channel where ETWS primary notifications are sent (step 42);
- If Paging Request messages are sent, optionally, setting new Mobile Identity indicating that ETWS is ongoing;
- Then, sending paging request message, optionally with set Mobile identity (step 43);
- Optionally, Sending legacy Immediate Assignment message with the Page Mode IE set to "extended paging" (step 44) making said user equipment listen to an additional paging group where an indication of an ongoing earthquake and/or tsunami warning message is included.

According to some embodiments, information on said assignment for said radio channel is included within rest octets of said paging request message.

According to some embodiments, when said earthquake and/or tsunami primary notification warning message is sent as a distribution message, the method further comprises the step of segmenting said earthquake and/or tsunami primary notification warning message by including a size of warning information and a sequence number of said warning message, whereby said user equipments are able to store received messages independent of the order of reception.

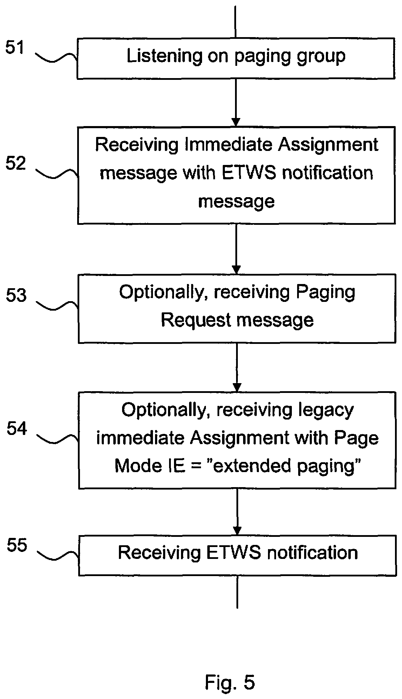

Thus, according to the second embodiment, the procedure in a user equipment, as shown in fig. 5, of receiving an earthquake and/or tsunami warning message in a communication network system comprising communication network nodes each serving at least one cell in which said user equipments are situated, is as follows:
- Listening on paging group (step 51);
- Receiving Immediate Assignment message with ETWS primary notification message (step 52) comprising assignment for a radio channel where the ETWS primary notification warning messages are sent and, switching to said radio channel;
- Optionally, receiving Paging Request messages with set new Mobile identity indicating that ETWS is ongoing (step 53);
- Optionally, receiving legacy Immediate Assignment message with Page Mode IE set to "Extended Paging" (step 54) making said user equipment to listen to an additional paging group;
- Receiving ETWS notification (step 55).

According to some embodiments, the method further comprises the steps of entering a non-discontinuous reception mode when receiving said set mobile identity.

According to some embodiments, said earthquake and/or tsunami primary notification warning message is sent on a control channel.

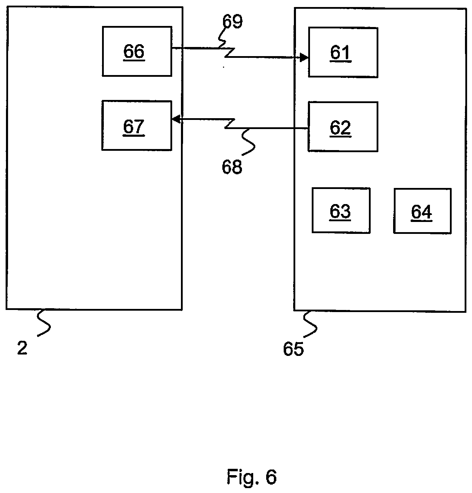

Figure 6 is a block diagram showing a user equipment 2, a communication network node 65 such as a base transceiver stations (BTS) 8 (i.e. a radio base station), a base station controller (BSC) 6 or a base station systems (BSS) 5 as shown in fig. 1, for transmitting/receiving an earthquake and/or tsunami warning message over a radio interface in a communication network system comprising communication network nodes 65 each serving at least one cell in which said user equipments 2 are situated.

The communication network node 65 comprises transmitting unit 62 including a radio transmitter and a receiving unit 61. The transmitting unit 62 is transmitting data to a receiving unit 67 of the user equipment 2 over a radio interface on a downlink channel 68. The receiving unit 61 is receiving data from the user equipment 2 on an uplink channel 69. The communication network node 65 further comprises a communication unit 64 configured to receive a request to transmit an earthquake and/or tsunami warning message. The communication network node 65 also comprises a processing unit 63.

The user equipment 2 comprises transmitting unit 46 including a radio transmitter arranged to transmit data packets to the receiving unit 61 of the communication network node 65 over the radio interface on the uplink channel 69 and a receiving unit 67 arranged to receive data packets transmitted from the transmitter 62 of the communication network node 65 on the downlink channel 68. The user equipment is arranged to listen to a paging group.

The skilled person realizes that when said communication network node is a BSS/BSC, the communication with the user equipment is transmitted via the BTS even though this is not shown in fig. 6.

According to some embodiments, the transmitting unit of the communication network node is arranged to send said earthquake and/or tsunami primary notification warning message within paging request messages.

According to some embodiments, said processing unit is arranged to segment said earthquake and/or tsunami primary notification warning message in several paging request messages, whereby an amount of earthquake and/or tsunami primary notification information that is included in each paging request message is constant in order to allow reception of segments in any order.

According to some embodiments, the transmitting unit of the communication network node is further arranged to send a control message triggering said user equipment to listen to an additional paging group in order to receive said paging request message comprising information about said earthquake and/or tsunami primary notification warning message.

According to some embodiments, information on said warning message is included within rest octets of said paging request message.

According to some embodiments, said processing unit further is arranged to set a mobile identity in said paging request messages indicating that said earthquake and/or tsunami warning message is ongoing.

According to some embodiments, the receiving unit of the user equipment is arranged to receive an earthquake and/or tsunami primary notification warning message within a paging request message.

According to some embodiments, the user equipment further is arranged to enter a non-discontinuous reception mode when receiving at least parts of said earthquake and/or tsunami primary notification warning message.

According to some embodiments, said receiving unit of the user equipment further is arranged to receive a control message, whereby said user equipment is arranged to listen to an additional paging group in order to receive said paging request message comprising information about said earthquake and/or tsunami primary notification warning message.

According to some embodiment, the transmitting unit of the communication network node is arranged to send an immediate assignment message comprising assignment for a radio channel where earthquake and/or tsunami primary notification warning messages are sent and, to send said earthquake and/or tsunami warning message.

According to some embodiments, if paging request messages will be sent, said transmitting unit of the communication network node is further arranged to send said paging request messages, if legacy immediate assignment messages will be sent, said processing unit is arranged to set a Page Mode IE to "extended paging" making said user equipment listen to an additional paging group where an indication of an ongoing earthquake and/or tsunami warning message is included.

According to some embodiments, said processing unit is arranged to set a mobile identity in said paging request messages indicating that said earthquake and/or tsunami warning message is ongoing.

According to some embodiments, information on said assignment for said radio channel is included within rest octets of said paging request message.

According to some embodiments, said earthquake and/or tsunami primary notification warning message is sent as a distribution message whereby said processing unit is arranged to segment said earthquake and/or tsunami primary notification warning message by including a size of warning information and a sequence number of said warning message, whereby said user equipments are able to store received messages independent of the order of reception.

According to some embodiments, the receiving unit of the user equipment is arranged to receive an immediate assignment message comprising assignment for a radio channel where earthquake and/or tsunami primary notification warning messages are sent, whereby said user equipment is arranged to switch to said radio channel, whereby said receiving unit is arranged to receive said earthquake and/or tsunami warning message.

According to some embodiments, said receiving unit of the user equipment is arranged to:
- when paging request messages are sent by said communication network node, receive a paging request message;
- otherwise, receive a legacy immediate assignment message comprising extended paging making said user equipment to listen to an additional paging group.

According to some embodiments, said receiving unit of the user equipment is arranged to receive said paging request message with a mobile identity set to indicate that said earthquake and/or tsunami warning message is ongoing.

According to some embodiments, the user equipment is arranged to enter a non-discontinuous reception mode when receiving said set mobile identity.

According to some embodiments, the transmitting unit of the communication network node is arranged to send said earthquake and/or tsunami primary notification warning message on a control channel.

According to some embodiments, the receiving unit of the user equipment is arranged to receive an earthquake and/or tsunami primary notification warning message on a control channel.

It will be appreciated that at least some of the procedures described above are carried out repetitively as necessary to respond to the time-varying characteristics of the channel between the transmitter and the receiver. To facilitate understanding, many aspects of the invention are described in terms of sequences of actions to be performed by, for example, elements of a programmable computer system. It will be recognized that the various actions could be performed by specialized circuits (e.g. discrete logic gates interconnected to perform a specialized function or application-specific integrated circuits), by program instructions executed by one or more processors, or a combination of both.

Moreover, the invention can additionally be considered to be embodied entirely within any form of computer-readable storage medium having stored therein an appropriate set of instructions for use by or in connection with an instruction-execution system, apparatus or device, such as computer-based system, processor-containing system, or other system that can fetch instructions from a medium and execute the instructions. As used here, a "computer-readable medium" can be any means that can contain, store, communicate, propagate, or transport the program for use by or in connection with the instruction-execution system, apparatus or device. The computer-readable medium can be, for example but not limited to, an electronic, magnetic, optical, electromagnetic, infrared, or semiconductor system, apparatus, device or propagation medium. More specific examples (a non-exhaustive list) of the computer-readable medium include an electrical connection having one or more wires, a portable computer diskette, a random access memory (RAM), a read only memory (ROM), an erasable programmable read only memory (EPROM or Flash memory), an optical fibre, and a portable compact disc read only memory (CD-ROM).

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

## Claims

1. A method in a communication network node of transmitting to user equipments an earthquake and/or tsunami warning message over a radio interface in a communication network system comprising communication network nodes each serving at least one cell in which said user equipments are situated, **characterized in that**, the method comprises the steps of:
- receiving a request to transmit an earthquake and/or tsunami primary notification warning message (21);
- sending said earthquake and/or tsunami primary notification warning message within paging request messages (22); wherein information on said earthquake and/or tsunami primary notification warning message is included within rest octets of said paging request message, the method further comprising
- segmenting said earthquake and/or tsunami primary notification warning message in several paging request messages, whereby an amount of earthquake and/or tsunami primary notification information that is included in each paging request message is constant in order to allow reception of segments in any order.

2. A method according to claim 1, **characterized in that**, the method further comprises the step of sending a control message triggering said user equipment to listen to an additional paging group in order to receive said paging request message comprising information about said earthquake and/or tsunami primary notification warning message.

3. A method according to any of the claims 1 - 2, **characterized in that**, the method further comprises the step of setting a mobile identity in said paging request messages indicating that said earthquake and/or tsunami primary notification warning message is ongoing;

4. A method according to claim 1, **characterized in that**, the sending said earthquake and/or tsunami primary notification warning message is on a Global System for Mobile communications, GSM,/Enhanced Data rates for GSM Evolution, EDGE, radio access network, GERAN, control channel of: a common control channel, CCCH, a packet common control channel, PCCCH, a paging channel, PCH, a packet paging channel, PPCH, and a specific packet channel assigned directly from paging groups on the CCCH or the PCCCH.

5. A method in a user equipment of receiving an earthquake and/or tsunami warning message over a radio interface in a communication network system comprising communication network nodes each serving at least one cell in which said user equipments are situated, **characterized in that**, the method comprises the steps of:
- listening to a paging group (31);
- receiving an earthquake and/or tsunami primary notification warning message within paging request messages (32), wherein information on said earthquake and/or tsunami primary notification warning message is included within rest octets of said paging request message, wherein said earthquake and/or tsunami primary notification warning message is segmented in several paging request messages, whereby an amount of earthquake and/or tsunami primary notification information that is included in each paging request message is constant in order to allow reception of segments in any order, and wherein the method further comprises
- entering a non-discontinuous reception mode when receiving at least parts of said earthquake and/or tsunami primary notification warning message.

6. A method according to claim 5, **characterized in that**, the method further comprises the steps of:
- receiving a control message;
- listening to an additional paging group in order to receive said paging request message comprising information about said earthquake and/or tsunami primary notification warning message.

7. A method according to claim 5, **characterized in that**, the receiving said earthquake and/or tsunami primary notification warning message is on a Global System for Mobile communications, GSM,/Enhanced Data rates for GSM Evolution, EDGE, radio access network, GERAN, control channel of: a common control channel, CCCH, a packet common control channel, PCCCH, a paging channel, PCH, a packet paging channel, PPCH, and a specific packet channel assigned directly from paging groups on the CCCH or the PCCCH.

8. A communication network node (65) for transmitting to user equipments an earthquake and/or tsunami warning message over a radio interface in a communication network system comprising communication network nodes each serving at least one cell in which said user equipments are situated, **characterized in that**, the communication network node comprises:
- a communication unit (64) arranged to receive a request to transmit an earthquake and/or tsunami primary notification warning message;
- a transmitting unit (62) arranged to send said earthquake and/or tsunami primary notification warning message within paging request messages, wherein information on said earthquake and/or tsunami primary notification warning message is included within rest octets of said paging request message, wherein said earthquake and/or tsunami primary notification warning message is segmented in several paging request messages, whereby an amount of earthquake and/or tsunami primary notification information that is included in each paging request message is constant in order to allow reception of segments in any order; and,
- a processing unit (63).

9. A communication network node according to claim 8, **characterized in that**, the transmitting unit is further arranged to send said earthquake and/or tsunami primary notification warning message on a Global System for Mobile communications, GSM,/Enhanced Data rates for GSM Evolution, EDGE, radio access network, GERAN, control channel of: a common control channel, CCCH, a packet common control channel, PCCCH, a paging channel, PCH, a packet paging channel, PPCH, and a specific packet channel assigned directly from paging groups on the CCCH or the PCCCH.

10. A user equipment (2) for receiving an earthquake and/or tsunami warning message over a radio interface in a communication network system comprising communication network nodes each serving at least one cell in which said user equipments are situated, **characterized in that**, the user equipment is arranged to listen to a paging group and comprises a receiving unit (67) arranged to receive an earthquake and/or tsunami primary notification warning message within a paging request message, wherein information on said earthquake and/or tsunami primary notification warning message is included within rest octets of said paging request message, wherein said earthquake and/or tsunami primary notification warning message is segmented in several paging request messages, whereby an amount of earthquake and/or tsunami primary notification information that is included in each paging request message is constant in order to allow reception of segments in any order, and wherein the user equipment is further arranged to enter a non-discontinuous reception mode when receiving at least parts of said earthquake and/or tsunami primary notification warning message.

11. A user equipment according to claim 10, **characterized in that**, said receiving unit is further arranged to receive said earthquake and/or tsunami primary notification warning message on a Global System for Mobile communications, GSM,/Enhanced Data rates for GSM Evolution, EDGE, radio access network, GERAN, control channel of: a common control channel, CCCH, a packet common control channel, PCCCH, a paging channel, PCH, a packet paging channel, PPCH, and a specific packet channel assigned directly from paging groups on the CCCH or the PCCCH.

## Patentansprüche

1. Verfahren in einem Kommunikationsnetzwerkknoten zum Übertragen einer Erbeben- und/oder Tsunamiwarnungsnachricht an Benutzerausrüstungen über eine Funkschnittstelle in einem Kommunikationsnetzwerksystem, das Kommunikationsnetzwerkknoten umfasst, die alle mindestens einer Zelle dienen, in der die Benutzerausrüstungen liegen, **dadurch gekennzeichnet, dass** das Verfahren die Schritte umfasst zum:
- Empfangen einer Anfrage, eine Erdbeben- und/oder Tsunamiprimärmitteilungswarnungsnachricht (21) zu übertragen;
- Senden der Erdbeben- und/oder Tsunamiprimärmitteilungswarnungsnachricht innerhalb von Funkrufanfragenachrichten (22); wobei Informationen über die Erdbeben- und/oder Tsunamiprimärmitteilungswarnungsnachricht innerhalb von Ruheachtbitzeichen der Funkrufanfragenachricht beinhaltet sind, das Verfahren weiter umfassend
- Segmentieren der Erdbeben- und/oder Tsunamiprimärmitteilungswarnungsnachricht in einige Funkrufanfragenachrichten, wobei eine Menge von Erdbeben- und/oder Tsunamiprimärmitteilungsinformationen, die in jeder Funkrufanfragenachricht beinhaltet ist, konstant ist, um Empfang von Segmenten in einer beliebigen Reihenfolge zu erlauben.

2. Verfahren nach Anspruch 1, **dadurch gekennzeichnet, dass** das Verfahren weiter den Schritt zum Senden einer Steuernachricht umfasst, die die Benutzerausrüstung auslöst, nach einer zusätzlichen Funkrufgruppe zu lauschen, um die Funkrufanfragenachricht zu empfangen, die Informationen über die Erdbeben- und/oder Tsunamiprimärmitteilungswarnungsnachricht umfasst.

3. Verfahren nach einem der Ansprüche 1-2, **dadurch gekennzeichnet, dass** das Verfahren weiter den Schritt zum Einstellen einer Mobilidentität in den Funkrufanfragenachrichten umfasst, die angibt, dass die Erdbeben- und/oder Tsunamiprimärmitteilungswarnungsnachricht im Gange ist.

4. Verfahren nach Anspruch 1, **dadurch gekennzeichnet, dass** das Senden der Erdbeben- und/oder Tsunamiprimärmitteilungswarnungsnachricht auf einem Global System for Mobile Communication, GSM/Enhanced Data Rate for GSM Evolution, EDGE, Funkzugriffsnetzwerk-, GERAN, Steuerkanal stattfindet, von: einem gemeinsamen Steuerungskanal, CCCH (Common Control CHannel), einem paketvermittelten gemeinsamen Steuerungskanal, PCCCH (Packet Common Control CHannel), einem Funkrufkanal, PCH (Paging CHannel), einem paketvermittelten Funkrufkanal, PPCH (Packet Paging CHannel), und einem spezifischen Paketkanal, der direkt von Funkrufgruppen auf dem CCCH oder dem PCCCH zugewiesen ist.

5. Verfahren in einer Benutzerausrüstung zum Empfangen einer Erdbeben- und/oder Tsunamiwarnungsnachricht über eine Funkschnittstelle in einem Kommunikationsnetzwerksystem, das Kommunikationsnetzwerkknoten umfasst, die jeweils mindestens einer Zelle dienen, in der die Benutzerausrüstungen liegen, **dadurch gekennzeichnet, dass** das Verfahren die Schritte umfasst zum:
- Lauschen nach einer Funkrufgruppe (31);
- Empfangen einer Erdbeben- und/oder Tsunamiprimärmitteilungswarnungsnachricht innerhalb von Funkrufanfragenachrichten (32), wobei Informationen über die Erdbeben- und/oder Tsunamiprimärmitteilungswarnungsnachricht innerhalb von Ruheachtbitzeichen der Funkrufanfragenachricht beinhaltet sind, wobei die Erdbeben- und/oder Tsunamiprimärmitteilungswarnungsnachricht in einige Funkrufanfragenachrichten segmentiert ist, wodurch eine Menge von Erdbeben- und/oder Tsunamiprimärmitteilungsinformationen, die in jeder Funkrufanfragenachricht beinhaltet ist, konstant ist, um Empfang von Segmenten in einer beliebigen Reihenfolge zu erlauben und wobei das Verfahren weiter umfasst
- Eintreten in einen nichtdiskontinuierlichen Empfangsmodus, wenn mindestens teile der Erdbeben- und/oder Tsunamiprimärmitteilungswarnungsnachricht empfangen werden.

6. Verfahren nach Anspruch 5, **dadurch gekennzeichnet, dass** das Verfahren weiter die Schritte umfasst zum:
- Empfangen einer Steuerungsnachricht;
- Lauschen nach einer zusätzlichen Funkrufgruppe, um die Funkrufanfragenachricht zu empfangen, die Informationen über die Erdbeben- und/oder Tsunamiprimärmitteilungswarnungsnachricht umfasst.

7. Verfahren nach Anspruch 5, **dadurch gekennzeichnet, dass** das Empfangen der Erdbeben- und/oder Tsunamiprimärmitteilungswarnungsnachricht auf einem Global System for Mobile Communications, GSM/Enhanced Data Rate for GSM Evolution, EDGE, Funkzugriffsnetzwerk-, GERAN, Steuerkanal stattfindet, von: einem gemeinsamen Steuerungskanal, CCCH, einem paketvermittelten gemeinsamen Steuerungskanal, PCCCH, einem Funkrufkanal, PCH, einem paketvermittelten Funkrufkanal, PPCH, und einem spezifischen Paketkanal, der direkt von Funkrufgruppen auf dem CCCH oder dem PCCCH zugewiesen ist.

8. Kommunikationsnetzwerkknoten (65) zum Übertragen einer Erdbeben- und/oder Tsunamiwarnungsnachricht an Benutzerausrüstungen über eine Funkschnittstelle in einem Kommunikationsnetzwerksystem, das Kommunikationsnetzwerkknoten umfasst, die jeweils mindestens einer Zelle dienen, in der die Benutzerausrüstungen liegen, **dadurch gekennzeichnet, dass** der Kommunikationsnetzwerkknoten umfasst:
- eine Kommunikationseinheit (64), die angeordnet ist, eine Anfrage zu empfangen, eine Erdbeben- und/oder Tsunamiprimärmitteilungswarnungsnachricht zu übertragen;
- eine Übertragungseinheit (62), die angeordnet ist, die Erdbeben- und/oder Tsunamiprimärmitteilungswarnungsnachricht innerhalb von Funkrufanfragenachrichten zu senden, wobei Informationen über die Erdbeben- und/oder Tsunamiprimärmitteilungswarnungsnachricht innerhalb von Ruheachtbitzeichen der Funkrufanfragenachricht beinhaltet sind, wobei die Erdbeben- und/oder Tsunamiprimärmitteilungswarnungsnachricht in einige Funkrufnachrichten segmentiert ist, wodurch eine Menge von Erdbeben- und/oder Tsunamiprimärmitteilungsinformationen, die in jeder Funkrufanfragenachricht beinhaltet ist, konstant ist, um Empfang von Segmenten in einer beliebigen Reihenfolge zu erlauben; und
- eine Verarbeitungseinheit (63).

9. Kommunikationsnetzwerkknoten nach Anspruch 8, **dadurch gekennzeichnet, dass** die Übertragungseinheit weiter angeordnet ist, die Erdbeben- und/oder Tsunamiprimärmitteilungswarnungsnachricht auf einem Global System for Mobile Communications, GSM/Enhanced Data Rate for GSM Evolution, EDGE, Funkzugriffsnetzwerk-, GERAN, Steuerkanal zu senden, von: einem gemeinsamen Steuerungskanal, CCCH, einem paketvermittelten gemeinsamen Steuerungskanal, PCCCH, einem Funkrufkanal, PCH, einem paketvermittelten Funkrufkanal, PPCH, und einem spezifischen Paketkanal, der direkt von Funkrufgruppen auf dem CCCH oder dem PCCCH zugewiesen ist.

10. Benutzerausrüstung (2) zum Empfangen einer Erdbeben- und/oder Tsunamiwarnungsnachricht über eine Funkschnittstelle in einem Kommunikationsnetzwerksystem, das Kommunikationsnetzwerkknoten umfasst, die jeweils mindestens einer Zelle dienen, in der die Benutzerausrüstungen liegen, **dadurch gekennzeichnet, dass** die Benutzerausrüstung angeordnet ist, nach einer Funkrufgruppe zu lauschen und eine Empfangseinheit (67) umfasst, die angeordnet ist, eine Erdbeben- und/oder Tsunamiprimärmitteilungswarnungsnachricht innerhalb einer Funkrufanfragenachricht zu empfangen, wobei Informationen über die Erdbeben- und/oder Tsunamiprimärmitteilungswarnungsnachricht innerhalb von Ruheachtbitzeichen der Funkrufanfragenachricht beinhaltet sind, wobei die Erdbeben- und/oder Tsunamiprimärmitteilungswarnungsnachricht in einige Funkrufanfragenachrichten segmentiert ist, wodurch eine Menge von Erdbeben- und/oder Tsunamiprimärmitteilungsinformationen, die in jeder Funkrufanfragenachricht beinhaltet ist, konstant ist, um Empfang von Segmenten in einer beliebigen Reihenfolge zu erlauben und wobei die Benutzerausrüstung weiter angeordnet ist, in einen nichtdiskontinuierlichen Empfangsmodus einzutreten, wenn mindestens Teile der Erdbeben- und/oder Tsunamiprimärmitteilungswarnungsnachricht empfangen werden.

11. Benutzerausrüstung nach Anspruch 10, **dadurch gekennzeichnet, dass** die Empfangseinheit weiter angeordnet ist, die Erdbeben- und/oder Tsunamiprimärmitteilungswarnungsnachricht auf einem Global System for Mobile Communications, GSM/Enhanced Data Rate for GSM Evolution, EDGE, Funkzugriffsnetzwerk-, GERAN, Steuerkanal zu empfangen, von: einem gemeinsamen Steuerungskanal, CCCH, einem paketvermittelten gemeinsamen Steuerungskanal, PCCCH, einem Funkrufkanal, PCH, einem paketvermittelten Funkrufkanal, PPCH, und einem spezifischen Paketkanal, der direkt von Funkrufgruppen auf dem CCCH oder dem PCCCH zugewiesen ist.

## Revendications

1. Procédé, dans un nœud de réseau de communication, de transmission à des équipements utilisateurs d'un message d'alerte au séisme et/ou au tsunami sur une interface radio dans un système de réseau de communication comprenant des nœuds de réseau de communication desservant chacun au moins une cellule dans laquelle lesdits équipements utilisateurs sont situés, **caractérisé en ce que** le procédé comprend les étapes suivantes :
- la réception d'une demande pour transmettre un message d'alerte de notification primaire de séisme et/ou de tsunami (21) ;
- l'envoi dudit message d'alerte de notification primaire de séisme et/ou de tsunami dans des messages de demande de radiomessagerie (22) ;
dans lequel une information sur ledit message d'alerte de notification primaire de séisme et/ou de tsunami est incluse dans des octets restants dudit message de demande de radiomessagerie, le procédé comprenant en outre
- la segmentation dudit message d'alerte de notification primaire de séisme et/ou de tsunami en plusieurs messages de demande de radiomessagerie, moyennant quoi une quantité d'information de notification primaire de séisme et/ou de tsunami qui est incluse dans chaque message de demande de radiomessagerie est constante afin de permettre une réception de segments dans n'importe quel ordre.

2. Procédé selon la revendication 1, **caractérisé en ce que** le procédé comprend en outre l'étape d'envoi d'un message de commande déclenchant ledit équipement utilisateur pour écouter un groupe de radiomessagerie additionnel de manière à recevoir ledit message de demande de radiomessagerie comprenant une information concernant ledit message d'alerte de notification primaire de séisme et/ou de tsunami.

3. Procédé selon l'une quelconque des revendications 1 et 2, **caractérisé en ce que** le procédé comprend en outre l'étape d'établissement d'une identité mobile dans lesdits messages de demande de radiomessagerie indiquant que ledit message d'alerte de notification primaire de séisme et/ou de tsunami est en cours.

4. Procédé selon la revendication 1, **caractérisé en ce que** l'envoi dudit message d'alerte de notification primaire de séisme et/ou de tsunami s'effectue sur un canal de commande de réseau d'accès radio de système mondial de communications mobiles, GSM, à débits de données améliorés pour l'évolution GSM, EDGE, GERAN, parmi : un canal de commande commun, CCCH, un canal de commande commun par paquets, PCCCH, un canal de radiomessagerie, PCH, un canal de radiomessagerie par paquets, PPCH, et un canal par paquets spécifique attribué directement à partir de groupes de radiomessagerie sur le CCCH ou le PCCCH.

5. Procédé, dans un équipement utilisateur, de réception d'un message d'alerte au séisme et/ou au tsunami sur une interface radio dans un système de réseau de communication comprenant des nœuds de réseau de communication desservant chacun au moins une cellule dans laquelle lesdits équipements utilisateurs sont situés, **caractérisé en ce que** le procédé comprend les étapes suivantes :
- l'écoute d'un groupe de radiomessagerie (31) ;
- la réception d'un message d'alerte de notification primaire de séisme et/ou de tsunami dans des messages de demande de radiomessagerie (32),
dans lequel une information sur ledit message d'alerte de notification primaire de séisme et/ou de tsunami est incluse dans des octets restants dudit message de demande de radiomessagerie, dans lequel ledit message d'alerte de notification primaire de séisme et/ou de tsunami est segmenté en plusieurs messages de demande de radiomessagerie, moyennant quoi une quantité d'information de notification primaire de séisme et/ou de tsunami qui est incluse dans chaque message de demande de radiomessagerie est constante afin de permettre une réception de segments dans n'importe quel ordre, et dans lequel le procédé comprend en outre
- le passage dans un mode de réception non discontinue lors de la réception d'au moins des parties dudit message d'alerte de notification primaire de séisme et/ou de tsunami.

6. Procédé selon la revendication 5, **caractérisé en ce que** le procédé comprend en outre les étapes suivantes :
- la réception d'un message de commande ;
- l'écoute d'un groupe de radiomessagerie additionnel de manière à recevoir ledit message de demande de radiomessagerie comprenant une information concernant ledit message d'alerte de notification primaire de séisme et/ou de tsunami.

7. Procédé selon la revendication 5, **caractérisé en ce que** la réception dudit message d'alerte de notification primaire de séisme et/ou de tsunami s'effectue sur un canal de commande de réseau d'accès radio de système mondial de communications mobiles, GSM, à débits de données améliorés pour l'évolution GSM, EDGE, GERAN, parmi : un canal de commande commun, CCCH, un canal de commande commun par paquets, PCCCH, un canal de radiomessagerie, PCH, un canal de radiomessagerie par paquets, PPCH, et un canal par paquets spécifique attribué directement à partir de groupes de radiomessagerie sur le CCCH ou le PCCCH.

8. Nœud de réseau de communication (65) pour transmettre à des équipements utilisateurs un message d'alerte au séisme et/ou au tsunami sur une interface radio dans un système de réseau de communication comprenant des nœuds de réseau de communication desservant chacun au moins une cellule dans laquelle lesdits équipements utilisateurs sont situés, **caractérisé en ce que** le nœud de réseau de communication comprend :
- une unité de communication (64) agencée pour recevoir une demande pour transmettre un message d'alerte de notification primaire de séisme et/ou de tsunami ;
- une unité de transmission (62) agencée pour envoyer ledit message d'alerte de notification primaire de séisme et/ou de tsunami dans des messages de demande de radiomessagerie, dans lequel une information sur ledit message d'alerte de notification primaire de séisme et/ou de tsunami est incluse dans des octets restants dudit message de demande de radiomessagerie, dans lequel ledit message d'alerte de notification primaire de séisme et/ou de tsunami est segmenté en plusieurs messages de demande de radiomessagerie, moyennant quoi une quantité d'information de notification primaire de séisme et/ou de tsunami qui est incluse dans chaque message de demande de radiomessagerie est constante afin de permettre une réception de segments dans n'importe quel ordre ; et
- une unité de traitement (63).

9. Nœud de réseau de communication selon la revendication 8, **caractérisé en ce que** l'unité de transmission est agencée en outre pour envoyer ledit message d'alerte de notification primaire de séisme et/ou de tsunami sur un canal de commande de réseau d'accès radio de système mondial de communications mobiles, GSM, à débits de données améliorés pour l'évolution GSM, EDGE, GERAN, parmi : un canal de commande commun, CCCH, un canal de commande commun par paquets, PCCCH, un canal de radiomessagerie, PCH, un canal de radiomessagerie par paquets, PPCH, et un canal par paquets spécifique attribué directement à partir de groupes de radiomessagerie sur le CCCH ou le PCCCH.

10. Equipement utilisateur (2) pour recevoir un message d'alerte au séisme et/ou au tsunami sur une interface radio dans un système de réseau de communication comprenant des nœuds de réseau de communication desservant chacun au moins une cellule dans laquelle lesdits équipements utilisateurs sont situés, **caractérisé en ce que** l'équipement utilisateur est agencé pour écouter un groupe de radiomessagerie et comprend une unité de réception (67) agencée pour recevoir un message d'alerte de notification primaire de séisme et/ou de tsunami dans un message de demande de radiomessagerie, dans lequel une information sur ledit message d'alerte de notification primaire de séisme et/ou de tsunami est incluse dans des octets restants dudit message de demande de radiomessagerie, dans lequel ledit message d'alerte de notification primaire de séisme et/ou de tsunami est segmenté en plusieurs messages de demande de radiomessagerie, moyennant quoi une quantité d'information de notification primaire de séisme et/ou de tsunami qui est incluse dans chaque message de demande de radiomessagerie est constante afin de permettre une réception de segments dans n'importe quel ordre, et dans lequel l'équipement utilisateur est agencé en outre pour passer dans un mode de réception non discontinue lors de la réception d'au moins des parties dudit message d'alerte de notification primaire de séisme et/ou de tsunami.

11. Equipement utilisateur selon la revendication 10, **caractérisé en ce que** l'unité de réception est agencée en outre pour recevoir ledit message d'alerte de notification primaire de séisme et/ou de tsunami sur un canal de commande de réseau d'accès radio de système mondial de communications mobiles, GSM, à débits de données améliorés pour l'évolution GSM, EDGE, GERAN, parmi : un canal de commande commun, CCCH, un canal de commande commun par paquets, PCCCH, un canal de radiomessagerie, PCH, un canal de radiomessagerie par paquets, PPCH, et un canal par paquets spécifique attribué directement à partir de groupes de radiomessagerie sur le CCCH ou le PCCCH.
